# EUROPEAN PATENT APPLICATION

(11) **EP 4 832 117 A2**
(43) Date of publication of application: **28.10.2026**
(21) Application number: 26173269.7
(22) Date of filing: 20.04.2026
(51) Int. Cl.: H01M 4/62, H01M 4/36

(54) **POSITIVE ELECTRODE ACTIVE MATERIALS, METHOD OF PREPARING POSITIVE ELECTRODE ACTIVE MATERIALS, AND RECHARGEABLE LITHIUM BATTERIES INCLUDING POSITIVE ELECTRODES HAVING POSITIVE ELECTRODE ACTIVE MATERIALS**

(30) Priority: 24.04.2025 KR 20250053790
(71) Applicant: SAMSUNG SDI CO., LTD., Yongin-si, Gyeonggi-do 17084 (KR)
(72) Inventor: Kim, Jinyoung, Yongin-si, Gyeonggi-do 17084 (KR); Hwang, Hoseong, Yongin-si, Gyeonggi-do 17084 (KR); Kim, Teayeop, Yongin-si, Gyeonggi-do 17084 (KR); Ji, Seorin, Yongin-si, Gyeonggi-do 17084 (KR); Lee, Jongjin, Yongin-si, Gyeonggi-do 17084 (KR)
(74) Representative: Meissner Bolte Partnerschaft mbB

(57) **Abstract**

A positive electrode active material according to some embodiments of the present disclosure may include a first positive electrode active material and a second positive electrode active material. The first positive electrode active material may include particles having a lithium cobalt-based oxide. The particles of the first positive electrode active material may have an average particle diameter D₅₀ from about 9 µm to about 25 µm. The second positive electrode active material may include particles having a lithium cobalt-based oxide and a layered carbon coating layer on a surface of the particles of the second positive electrode active material. The particles of the second positive electrode active material may have an average particle diameter D₅₀ from about 1 µm to about 9 µm.

## Description

### BACKGROUND

### 1. Field

The present disclosure relates to positive electrode active materials, positive electrodes having the positive electrode active materials, and rechargeable lithium batteries including the positive electrodes having the positive electrode active materials.

### 2. Description of the Related Art

A portable information device (such as a cell phone, a laptop, or a smart phone) has used a rechargeable lithium battery having high energy density and easy portability as a driving power source. Recently, research has been actively conducted to use a rechargeable lithium battery with high energy density as a driving power source for hybrid or electric vehicles or as a power storage source.

To implement rechargeable lithium batteries suitable for the above-described applications, various positive electrode active materials are being examined. For example, lithium nickel-based oxide, lithium nickel manganese cobalt composite oxide, lithium nickel cobalt aluminum composite oxide, or lithium cobalt-based oxide are mainly used as a positive electrode active material.

Recently, as the demand for rechargeable lithium batteries with superior performance, such as superior capacity or superior energy density, has rapidly increased, there is a need to develop rechargeable lithium batteries that can exhibit long cycle-life characteristics.

### SUMMARY

The invention provides a positive electrode active material capable of exhibiting long cycle-life characteristics, a positive electrode having the positive electrode active material, and a rechargeable lithium battery including the positive electrode having the positive electrode active material.

A positive electrode active material according to the present invention includes a first positive electrode active material and a second positive electrode active material. The first positive electrode active material includes particles having a lithium cobalt-based oxide. The particles of the first positive electrode active material have an average particle diameter D₅₀ from about 9 µm to about 25 µm. The second positive electrode active material includes particles having a lithium cobalt-based oxide and a layered carbon coating layer on a surface of the particles of the second positive electrode active material. The particles of the second positive electrode active material have an average particle diameter D₅₀ from about 1 µm to about 9 µm.

In some embodiments, the second positive electrode active material may include the carbon coating layer in an amount from about 0.05 wt% to about 5.0 wt% based on 100 wt% of the second positive electrode active material.

In some embodiments, the carbon coating layer of the second positive electrode active material may include graphene having a layered structure including from 2 layers to 50 layers.

In some embodiments, in the carbon coating layer, the graphene may be derived from a plate-like carbon material.

In some embodiments, the carbon material may include graphene, graphite, or a combination thereof.

In some embodiments, an average size D₅₀ of the carbon material may be less than or equal to about 2.5 µm.

In some embodiments, an average size D₅₀ of the carbon material may be from about 50 nm to about 900 nm.

In some embodiments, a thickness of the carbon material may be less than or equal to about 1.0 µm.

In some embodiments, the carbon coating layer may have a form of a continuous film or an island.

In some embodiments, the carbon coating layer may have a ratio I_{D}/I_{G}, expressed as a peak intensity I_{D} near 1350 cm⁻¹ to a peak intensity I_{G} near 1580 cm⁻¹ in a Raman spectrum, that may be from 0.15 to 0.50.

In some embodiments, the first positive electrode active material may include less than or equal to about 0.01 wt% of a carbon material on a surface of each particle of the first positive electrode active material.

In some embodiments, the lithium cobalt-based oxide of the first positive electrode active material and the lithium cobalt-based oxide of the second positive electrode active material may be the same as each other or may be different from each other and may be each independently represented by: Liₐ₁Coₓ₁M¹_{y1}O_{2-b1}X_{b1}. Further, 0.9≤a1≤1.8, 0.7≤x1≤1, 0≤y1≤0.3, 0.9≤x1+y1≤1.1, and 0≤b1≤0.1. M¹ may be one or more elements of Al, B, Ba, Ca, Ce, Cr, Cu, Fe, Mg, Mn, Mo, Ni, Se, Si, Sn, Sr, Ti, V, W, Y, Zn, and Zr. X may be one or more elements of F, P, and S.

In some embodiments, the lithium cobalt-based oxide of the first positive electrode active material and the lithium cobalt-based oxide of the second positive electrode active material each further contain aluminum. The second positive electrode active material may include a greater amount of aluminum, based on 100 wt% of a total metal in the second positive electrode active material excluding lithium, than an amount of aluminum in the first positive electrode active material based on 100 wt% of a total metal in the first positive electrode active material excluding lithium.

In some embodiments, the positive electrode active material may include the first positive electrode active material in an amount from about 20 wt% to about 95 wt% based on a total of 100 wt% of the first positive electrode active material and the second positive electrode active material. The positive electrode active material may include the second positive electrode active material in an amount from about 5 wt% to about 80 wt% based on the total of 100 wt% of the first positive electrode active material and the second positive electrode active material.

A method of preparing a positive electrode active material according to the present invention includes preparing a first positive electrode active material including particles including a lithium cobalt-based oxide, the particles of the first positive electrode active material having an average particle diameter D₅₀ from about 9 µm to about 25 µm; preparing a second positive electrode active material by dry mixing particles of the second positive electrode active material, which includes a lithium cobalt-based oxide and which have an average particle diameter D₅₀ from about 1 µm to about 9 µm, with a plate-like carbon material; and mixing the first positive electrode active material and the second positive electrode active material.

In some embodiments, the method may further include preparing the carbon material so that the carbon material may have an average size D₅₀ of less than or equal to about 2.5 µm.

In some embodiments, preparing the second positive electrode active material may include mixing the particles of the second positive electrode active material and the carbon material using a mixer, preferably a Nobilta mixer, and mixing the particles of the second positive electrode active material and the carbon material at a shear rate from about 1,000 s⁻¹ to about 9,000 s⁻¹ and using a blade rotation speed of less than or equal to about 20 m/s.

In some embodiments, preparing the second positive electrode active material may include mixing the particles of the second positive electrode active material and an amount of the carbon material ranging from about 0.05 wt% to about 5.0 wt% based on a total of 100 wt% of the particles of the second positive electrode active material and the carbon material.

A rechargeable lithium battery according to the present invention includes a positive electrode, a negative electrode, and an electrolyte. The positive electrode includes a current collector and a positive electrode active material layer on the current collector. The positive electrode active material layer includes the positive electrode active material as described above.

The positive electrode active material according to the invention may minimize deterioration due to charge and discharge and may improve particle strength. In addition, the positive electrode according to the invention may improve adhesive strength and conductivity with the electrode plate, and the rechargeable lithium battery according to the invention may exhibit excellent cycle-life characteristics and may also have high capacity and high energy density.

A method of preparing a positive electrode active material according to the invention may provide a positive electrode active material that exhibits long cycle-life characteristics while minimizing manufacturing costs.

### BRIEF DESCRIPTION OF THE DRAWINGS

FIGS. 1 to 4 are views schematically showing a rechargeable lithium battery according to some embodiments of the present disclosure.
FIG. 5 shows a scanning electron microscope image of the surface of a second positive electrode active material according to some embodiments of the present disclosure.
FIG. 6 shows a transmission electron microscope image of the cross-section of a second positive electrode active material according to some embodiments of the present disclosure.

### DETAILED DESCRIPTION

Hereinafter, specific embodiments will be described in detail so that one of ordinary skill in the art can easily implement those embodiments. However, the embodiments of the present disclosure may take many different forms, and the embodiments of the present disclosure are not to be construed as limited to the descriptions herein.

The terminology used herein is used to describe embodiments only and is not intended to limit the present disclosure. The singular expression includes the plural expression unless the context clearly dictates otherwise.

"Combination thereof" means a mixture, a laminate, a composite, a copolymer, an alloy, a blend, and a reaction product of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, and/or regions, are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a geometry formed on the whole surface when viewed from a plan view, but also a geometry formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and performing calculations from resulting values and/or measurements. Unless otherwise defined, the average particle diameter may mean the diameter D₅₀ of particles having a cumulative volume of 50 volume% in the particle size distribution. As used herein, when a definition is not otherwise provided, the average particle diameter means a diameter D₅₀ of particles having a cumulative volume of 50 volume% in the particle size distribution that is obtained by measuring a size (diameter or long axis length) of about 20 particles at random in a scanning electron microscope image.

Herein, "or" is not to be construed as an exclusive meaning; for example, "A or B" is construed to include A, B, and A+B.

"Metal" is interpreted as a concept including ordinary metals, transition metals and metalloids (semi-metals).

### Positive Electrode Active Material

A positive electrode active material according to the invention includes a first positive electrode active material including particles including lithium cobalt-based oxide and having an average particle diameter D₅₀ from about 9 µm to about 25 µm; and a second positive electrode active material including particles including lithium cobalt-based oxide and a layered carbon coating layer on the surface of the particles, and having an average particle diameter D₅₀ from about 1 µm to about 9 µm. The first positive electrode active material having a relatively large average particle size may be expressed as large particles, and the second positive electrode active material having a relatively small average particle size may be expressed as small particles.

In general, for positive electrode active materials including lithium cobalt-based oxides, a design has been proposed to maximize capacity and energy density by mixing large particles with relatively large average particle diameters and small particles with relatively small average particle diameters. However, there is a problem in that the deterioration of the particles progresses relatively quickly, reducing a cycle-life of the battery.

According to some embodiments, a positive electrode active material may simultaneously include both large and small particles to maximize capacity and energy density. At the same time, because only the small particles include a carbon coating layer on the surface, a deterioration of the small particles may be minimized, and cycle-life characteristics of the rechargeable lithium battery can be improved.

In addition, the second positive electrode active material includes a layered carbon coating layer on the surface, and, because even a low amount of carbon material may be coated on the surface of the active material particles, it is possible to increase adhesive strength and conductivity. Therefore, even if a small amount of binder and conductive material is used during the manufacture of the positive electrode, high adhesive strength and conductivity with the electrode plate may be achieved. In addition, as the amount of the binder and conductive material used in the manufacture of the positive electrode decreases, the amount of the positive electrode active material may increase, so that a rechargeable lithium battery including the positive electrode active material may exhibit high capacity and high energy density characteristics.

### First Positive Electrode Active Material

The first positive electrode active material may include particles including lithium cobalt-based oxide and may have an average particle diameter D₅₀ from about 9 µm to about 25 µm.

The lithium cobalt-based oxide of the first positive electrode active material may be represented by Chemical Formula 1:

[Chemical Formula 1] Liₐ₁Coₓ₁M¹_{y1}O_{2-b1}X_{b1}.

In Chemical Formula 1, 0.9≤a1≤1.8, 0.7≤x1≤1, 0≤y1≤0.3, 0.9≤x1+y1≤1.1, and 0≤b1≤0.1; M¹ is one or more elements of Al, B, Ba, Ca, Ce, Cr, Cu, Fe, Mg, Mn, Mo, Ni, Se, Si, Sn, Sr, Ti, V, W, Y, Zn, and Zr; and X is one or more elements of F, P, and S.

The lithium cobalt-based oxide of the first positive electrode active material may further include aluminum. The lithium cobalt-based oxide of the first positive electrode active material may be represented by Chemical Formula 2:

[Chemical Formula 2] Liₐ₂Coₓ₂Al_{y2}M²_{z2}O_{2-b2}X_{b2}.

In Chemical Formula 2, 0.9≤a2≤1.8, 0.881≤x2≤0.987, 0.013≤y2≤0.019, 0≤z2≤0.1, 0.9≤x2+y2+z2≤1.1, and 0≤b2≤0.1; M² is one or more elements of B, Ba, Ca, Ce, Cr, Cu, Fe, Mg, Mn, Mo, Nb, Si, Sn, Sr, Ti, V, W, Y, Zn, and Zr; and X is one or more elements of F, P, and S.

In Chemical Formula 2, 0.883≤x2≤0.987, 0.013≤y2≤0.017, 0≤z2≤0.1, or 0.883≤x2≤0.985, 0.015≤y2≤0.017, 0≤z2≤0.1. In addition, in Chemical Formula 2, 0.9≤a2≤1.5, 0.9≤a2≤1.2, or 0.98≤a2≤1.0.

In the lithium cobalt-based oxide of the first positive electrode active material, an amount of Al based on 100 wt% of the total metal excluding lithium may be less than or equal to about 0.9 wt% (less than or equal to about 9,000 ppm), for example, less than or equal to about 0.88 wt%, less than or equal to about 0.86 wt%, less than or equal to about 0.84 wt%, less than or equal to about 0.82 wt%, or less than or equal to about 0.8 wt% and may be greater than or equal to about 0.6 wt%, greater than or equal to about 0.62 wt%, greater than or equal to about 0.64 wt%, greater than or equal to about 0.66 wt%, greater than or equal to about 0.68 wt%, or greater than or equal to about 0.7 wt%. When the amount of Al satisfies the above ranges, the positive electrode active material is structurally stable at high voltage and its capacity, resistance, and/or cycle-life characteristics can be improved.

The average particle diameter D₅₀ of the first positive electrode active material is from about 9 µm to about 25 µm and may be, for example, from about 10 µm to about 25 µm, from about 11 µm to about 23 µm, or from about 12 µm to about 20 µm. When the average particle diameter D₅₀ of the first positive electrode active material satisfies the above ranges, the structural stability of the positive electrode active material may be improved, and the long cycle-life characteristics of a rechargeable lithium battery including the positive electrode active material may be implemented. The average particle diameter D₅₀ of the first positive electrode active material may be obtained by randomly selecting about 20 particles from a scanning electron microscope image of the particles, measuring their particle diameters (diameter, long diameter, or long axis length) to obtain a particle size distribution, and then taking the size of particles having a cumulative volume of 50 vol% from the particle size distribution as the average particle diameter.

The first positive electrode active material may include less than or equal to about 0.01 wt%, for example, from about 0 wt% to about 0.01 wt%, less than or equal to about 0.009 wt%, less than or equal to about 0.008 wt%, less than or equal to about 0.007 wt%, less than or equal to about 0.006 wt%, or less than or equal to about 0.005 wt% of a carbon material on the surface of the particles. Because the first positive electrode active material may not include carbon material on the surface of the particles, there is not necessarily a lower limit to the amount of the carbon material.

The first positive electrode active material may be included in an amount from about 20 wt% to about 95 wt%, for example, from about 30 wt% to about 90 wt%, from about 45 wt% to about 85 wt%, or from about 60 wt% to about 80 wt% based on a total of 100 wt% of the first positive electrode active material and the second positive electrode active material. When the amount of the first positive electrode active material satisfies the above ranges, the capacity and the mixture density of the positive electrode can be improved, and cycle-life characteristics and energy density of the rechargeable lithium battery can be improved.

### Second Positive Electrode Active Material

The second positive electrode active material may include particles including lithium cobalt-based oxide and a layered carbon coating layer on the surface of the particles and may have an average particle diameter D₅₀ from about 1 µm to about 9 µm.

The average particle diameter D₅₀ of the second positive electrode active material may be from about 1 µm to about 9 µm, for example, from about 1.5 µm to about 8.8 µm, from about 2 µm to about 8.5 µm, or from about 2.5 µm to about 8.3 µm. When the average particle diameter D₅₀ of the second positive electrode active material satisfies the above ranges, the structural stability of the positive electrode active material may be improved, and long cycle-life characteristics of a rechargeable lithium battery including the positive electrode active material may be achieved. The average particle diameter D₅₀ of the second positive electrode active material may be obtained by randomly selecting about 20 particles from a scanning electron microscope image of the particles, measuring their particle diameters (diameter, long diameter, or long axis length) to obtain a particle size distribution, and then taking the size of particles having a cumulative volume of 50 vol% from the particle size distribution as the average particle diameter.

The lithium cobalt-based oxide of the first positive electrode active material and the lithium cobalt-based oxide of the second positive electrode active material may be the same as or different from each other and may each be independently represented by Chemical Formula 1 described above.

The lithium cobalt-based oxide of the second positive electrode active material may further include aluminum. If the lithium cobalt-based oxide of the first positive electrode active material and the lithium cobalt-based oxide of the second positive electrode active material each further contain aluminum, the amount of aluminum based on 100 wt% of the total metal excluding lithium in the second positive electrode active material may be greater than the amount of aluminum based on 100 wt% of the total metal excluding lithium in the first positive electrode active material. Because the amount of aluminum of the small particles that deteriorate relatively quickly is increased, structural stability at high voltage can be secured, and, at the same time, the capacity, resistance, or cycle-life characteristics of a rechargeable lithium battery including a positive electrode active material may be improved.

The lithium cobalt-based oxide of the second positive electrode active material may be represented by Chemical Formula 3:

[Chemical Formula 3] Liₐ₃Coₓ₃Al_{y3}M³_{z3}O_{2-b3}.

In Chemical Formula 3, 0.9≤a3≤1.8, 0.878≤x3≤0.985, 0.015≤y3≤0.022, 0≤z3≤0.1, 0.9≤x3+y3+z3≤1.1, and 0≤b3≤0.1, and M³ is one or more elements of B, Ba, Ca, Ce, Cr, Cu, Fe, Mg, Mn, Mo, Nb, Si, Sn, Sr, Ti, V, W, Y, Zn, and Zr.

In Chemical Formula 3, 0.881≤x3≤0.984, 0.016≤y3≤0.019, 0≤z3≤0.1; or 0.9≤a3≤1.5, 0.9≤a3≤1.2, or 0.98≤a3≤1.0.

In the lithium cobalt-based oxide of the second positive electrode active material, an amount of Al based on 100 wt% of the total metal excluding lithium may be less than or equal to about 1.0 wt%, for example, less than or equal to about 0.98 wt%, less than or equal to about 0.96 wt%, less than or equal to about 0.94 wt%, less than or equal to about 0.92 wt%, or less than or equal to about 0.90 wt% and may be greater than or equal to about 0.70 wt%, greater than or equal to about 0.71 wt%, greater than or equal to about 0.72 wt%, greater than or equal to about 0.73 wt%, greater than or equal to about 0.74 wt%, or greater than or equal to about 0.75 wt%. When the amount of Al satisfies the above ranges, the positive electrode active material is structurally stable at high voltage, and the positive electrode active material's capacity, resistance, or cycle-life characteristics can be improved.

The carbon coating layer is located on the surface of the particles and may improve the particle strength of the second positive electrode active material and may prevent deterioration of the second positive electrode active material. The carbon coating layer may include graphene having a layered structure of 50 layers or less.

When mixing the large particles and the small particles, the small particles may deteriorate relatively quickly, reducing the cycle-life of the battery. Because the second positive electrode active material (which includes the small particles), include a carbon coating layer on the surface of the small particles, deterioration of the small particles may be minimized and the cycle-life characteristics of the rechargeable lithium battery may be improved.

In addition, through the carbon coating layer, even when using a small amount of binder and conductive material during the manufacture of the positive electrode, adhesive strength and conductivity with the electrode plate can be secured. As the amount of the binder or conductive material used in the manufacture of the positive electrode decreases, the amount of the positive electrode active material may increase, so that the rechargeable lithium battery can exhibit high capacity and high energy density characteristics.

Meanwhile, technologies have been proposed to coat the surface of particles with amorphous carbon and to utilize it as a positive electrode active material, but uniform coating is difficult and there are limitations in preventing deterioration of the active material. In the case of a positive electrode active material according to some embodiments of the present disclosure, the second positive electrode active material, i.e., small particles, may include a carbon coating layer including crystalline carbon provided in a two-dimensional plane, and, because the carbon coating layer is provided in a uniform film geometry having a thickness of up to several tens of nanometers, deterioration of small particles may be prevented more effectively than in the case of coating amorphous carbon, and better cycle-life characteristics of a rechargeable lithium battery may be realized. In addition, it is possible to improve the mixture density of the electrode plate, to improve the electronic conductivity and ionic conductivity of the positive electrode, to increase the energy density of the rechargeable lithium battery while decreasing the resistance of the positive electrode, and realize better electrochemical performance of the rechargeable lithium battery.

The layered structure of 50 layers or less may be expressed as a layered structure of 50 atomic layers or less. The carbon coating layer may include graphene having a layered structure that is from 2 to 50 layers, from 2 to 48 layers, from 5 to 45 layers, from 7 to 40 layers, or from 10 to 35 layers. The number of layers of the layered structure may be measured from high-resolution transmission electron microscopy (HR-TEM) images of the second positive electrode active material particles.

The interlayer spacing d₀₀₂ of the layered structure may be from about 0.320 nm to about 0.350 nm, for example, from about 0.325 nm to about 0.348 nm, from about 0.328 nm to about 0.345 nm, or from about 0.330 nm to about 0.342 nm. When the interlayer spacing d₀₀₂ of the layered structure satisfies the above ranges, deterioration of the second positive electrode active material may be prevented, a particle strength of the second positive electrode active material may be improved, and a density of the positive electrode may be maximized. The interlayer spacing d₀₀₂ may be measured by a method known to those skilled in the art. The interlayer spacing d₀₀₂ of the layered structure may be measured by obtaining the peak of a 002 plane through X-ray diffraction (XRD) of the carbon coating layer and then analyzing the peak of the 002 plane. The 002 plane represents the range of 25.0° < 2θ < 27.0°, where 20 represents the diffraction angle. XRD measurement data may be subjected to noise removal (i.e., a baseline setting) using a conventional program equipped in the XRD device as a data processing and analysis program. Additionally, the peak profile of the peak on the 002 plane may be fitted with a conventional fitting function such as a Gaussian function or a Lorenz function. In addition, the interlayer spacing d₀₀₂ of the layered structure may be expressed by a method of measuring the interlayer spacing d₀₀₂ of a plate-like carbon material, and the interlayer spacing d₀₀₂ of the carbon material may be measured through XRD analysis of the carbon material. The number of layers in the layered structure, the interlayer spacing (d₀₀₂), and the thickness of the coating layer are determined as average values obtained from measurements at multiple randomly selected locations on the cross-section of the core particles via HR-TEM. It is noted that the correlation between these parameters follows the physical characteristics of the graphene coating, where the total thickness of the coating layer is the product of the number of layers and the average interlayer spacing.

In the carbon coating layer of the second positive electrode active material, the graphene may be derived from a plate-like carbon material. The carbon material may be expressed as a sheet-type carbon material or a 2D carbon material and may include crystalline carbon. The carbon material may include graphene, graphite, or a combination thereof and may specifically be, for example, particulate graphite. In some embodiments, the graphene of the carbon coating layer may be derived from particulate graphite. The carbon coating layer has a layered structure exhibiting a dense crystal structure, includes crystalline carbon provided in a two-dimensional plane on the surface of the particles and may have a thin and uniform thickness. Accordingly, deterioration of the second positive electrode active material may be reduced, a particle strength of the second positive electrode active material may be improved, and a density of the positive electrode may be maximized. In addition, an electronic conductivity of the positive electrode and an interfacial resistance of the positive electrode may be improved, the intercalation and deintercalation of lithium ions of the positive electrode may be more effective, and an ionic conductivity of the positive electrode may be improved because the lithium ions diffuse along the layered structure.

The average size D₅₀ of the carbon material may be less than or equal to about 2.5 µm, for example, less than or equal to about 1.5 µm, less than or equal to about 1.0 µm, less than 1 µm, or less than or equal to about 0.5 µm, may be greater than or equal to about 0.01 µm, greater than or equal to about 0.05 µm, or greater than or equal to about 0.08 µm and may be from about 10 nm to about 1,000 nm, from about 30 nm to about 950 nm, or from about 50 nm to about 900 nm. When the average size of the carbon material satisfies the above ranges, the carbon coating layer may be provided with a uniform thickness on the surface of the particles, deterioration of the second positive electrode active material may be reduced, a particle strength of the second positive electrode active material may be improved, and a density of the positive electrode may be maximized. The average size D₅₀ of the carbon material may be measured through a particle size analyzer, and refers to the size of particles having a cumulative volume of 50 vol% in the particle size distribution. Also, the particle size may mean a length of the longest axis in the plane direction perpendicular to the thickness direction in the planar geometry.

The thickness of the carbon material may be less than or equal to about 1.0 µm, for example, less than about 1 µm, less than or equal to about 0.9 µm, less than or equal to about 0.7 µm, or less than or equal to about 0.5 µm, may be greater than or equal to about 0.01 µm, greater than or equal to about 0.05 µm, or greater than or equal to about 0.08 µm. When the thickness of the carbon material satisfies the above ranges, the carbon coating layer may be provided with a uniform thickness on the surface of the particles, deterioration of the second positive electrode active material may be reduced, a particle strength of the second positive electrode active material may be improved, and a density of the positive electrode may be maximized. The thickness of the carbon material may be measured through SEM or TEM images of the carbon material particles.

The carbon material may have a ratio I_{D}/I_{G} of the peak intensity I_{D} near 1350 cm⁻¹ to the peak intensity I_{G} near 1580 cm⁻¹ in the Raman spectrum of about 0.15 to about 0.50, for example, from about 0.15 to about 0.45, from about 0.18 to about 0.45, or from about 0.20 to about 0.40. When the I_{D}/I_{G} value of the carbon material satisfies the above ranges, the carbon coating layer may be provided with a uniform thickness on the surface of the particles, deterioration of the second positive electrode active material may be reduced, a particle strength of the second positive electrode active material may be improved, and a density of the positive electrode may be maximized. For instance, the Raman spectra may be measured using a Raman spectrometer (e.g., ICRM7000 (Renishaw), etc.) under the conditions of a laser wavelength of about 632 nm and a lowest Raman shift of about 946 cm⁻¹. The peak intensity ratios described herein are obtained from peaks observed in the Raman shift range starting from the lowest Raman shift of about 946 cm⁻¹. These measurement conditions are standard in the art, and it would be within the ability of a person skilled in the art to adjust these parameters, such as laser power or exposure time, while maintaining the relative trend of the peak intensity ratios, to ensure reproducibility.

In the second positive electrode active material, the carbon coating layer may be included in an amount from about 0.05 wt% to about 5.0 wt%, for example, from about 0.1 wt% to about 5.0 wt%, from about 0.2 wt% to about 3.0 wt%, from about 0.2 wt% to about 2.5 wt%, from about 0.2 wt% to about 2.0 wt%, from about 0.2 wt% to about 1.0 wt%, or from about 0.2 wt% to about 0.8 wt% based on 100 wt% of the second positive electrode active material. When the amount of the carbon coating layer satisfies the above ranges, deterioration of the second positive electrode active material may be reduced, a particle strength of the second positive electrode active material may be improved, and a density of the positive electrode may be maximized. Even if the amount of the carbon coating layer is an extremely small amount of less than about 1 wt%, the carbon coating layer may be coated on the surface of the particles well, thereby increasing the electrical conductivity of the positive electrode active material, increasing the lubrication degree, and increasing the density of the positive electrode. If the carbon coating layer includes graphene with a layered structure of 50 layers or less, an amount of graphene may be described as being the same as the amount of the carbon coating layer.

In the second positive electrode active material, the carbon coating layer may be in a form of a continuous film or in a form of an island. The carbon coating layer may be in the form of a film that continuously surrounds a surface of the particle or may be in the form of a shell that surrounds an entire surface of the particle. When the carbon coating layer is provided to completely cover the surface of the particles, a particle strength of the second positive electrode active material may be improved and a density of the positive electrode may be maximized. In addition, the second positive electrode active material may have improved structural stability without increasing resistance or decreasing capacity, and the density of the positive electrode including the positive electrode active material may be improved.

The carbon coating layer may have a ratio I_{D}/I_{G} of the peak intensity I_{D} near 1350 cm⁻¹ to the peak intensity I_{G} near 1580 cm⁻¹ in the Raman spectrum of about 0.15 to about 0.50, for example, about 0.15 to about 0.45, about 0.18 to about 0.45, or about 0.20 to about 0.40. If the I_{D}/I_{G} value of the carbon coating layer satisfies the above ranges, a deterioration of the second positive electrode active material may be reduced, a particle strength of the second positive electrode active material may be improved, and a density of the positive electrode may be maximized. When the carbon coating layer includes graphene with a layered structure of 50 layers or less, the I_{D}/I_{G} of the graphene may be described in the same way as the I_{D}/I_{G} of the carbon coating layer.

A thickness of the carbon coating layer may be from about 3 nm to about 500 nm, for example, from about 3 nm to about 400 nm, from about 2 nm to about 300 nm, from about 3 nm to about 200 nm, from about 3 nm to about 100 nm, from about 4 nm to about 50 nm, from about 5 nm to about 30 nm, from about 5 nm to about 20 nm, or from about 5 nm to about 15 nm. When the thickness of the carbon coating layer satisfies the above ranges, deterioration of the second positive electrode active material may be reduced, a particle strength of the second positive electrode active material may be improved, and a density of the positive electrode may be maximized without increasing the resistance or decreasing the capacity due to the carbon coating layer. The thickness of the carbon coating layer may be measured by a transmission electron microscope on the cross-section of the positive electrode active material particles cut by FIB (focused ion beam). However, the present disclosure is not limited thereto, and the thickness of the carbon coating layer may be measured through, for example, SEM, TOF-SIMS, XPS, or EDS analysis and may be measured through a TEM-EDS line profile.

A difference between a highest and a lowest thicknesses of the carbon coating layer in one second positive electrode active material may be less than or equal to about 30 nm, for example, less than or equal to about 25 nm, less than or equal to about 20 nm, or less than or equal to about 15 nm and may be greater than or equal to about 0.30 nm, greater than or equal to about 0.33 nm, greater than or equal to about 0.35 nm, or greater than or equal to about 0.40 nm. The difference between the highest and the lowest thicknesses of the carbon coating layer satisfying the above ranges means that a carbon coating layer of uniform thickness is well provided in a film form on the surface of the particles. Accordingly, deterioration of the second positive electrode active material may be reduced, a particle strength of the second positive electrode active material may be improved, and a density of the positive electrode may be maximized. The highest and lowest thicknesses of the carbon coating layer may be measured based on an electron microscope image of the second positive electrode active material. In an electron microscope image of a cross-section of the second positive electrode active material particle, the thickness of the thickest part of the cross-section of the carbon coating layer may be defined as the highest thickness of the carbon coating layer, and the thickness of the thinnest part may be defined as the lowest thickness of the carbon coating layer. A thickness of the carbon coating layer may be a vertical distance from the outer surface of the particle to the outer surface of the carbon coating layer. A scanning electron microscope or a transmission electron microscope may be used as an electron microscope.

The second positive electrode active material may be included in an amount from about 5 wt% to about 80 wt%, for example, from about 10 wt% to about 70 wt%, from about 15 wt% to about 55 wt%, or from about 20 wt% to about 40 wt% based on a total of 100 wt% of the first positive electrode active material and the second positive electrode active material. When the amount of the second positive electrode active material satisfies the above ranges, the energy density of the rechargeable lithium battery may be improved.

### Method of Preparing Positive Electrode Active Material

A method of preparing a positive electrode active material according to the invention includes preparing a first positive electrode active material including particles including lithium cobalt-based oxide and having an average particle diameter D₅₀ from about 9 µm to about 25 µm; dry mixing particles including lithium cobalt-based oxide and having an average particle diameter D₅₀ from about 1 µm to about 9 µm with a carbon material to prepare a second positive electrode active material; and mixing the first positive electrode active material and the second positive electrode active material.

### Preparing of First Positive Electrode Active Material

A first positive electrode active material including particles including lithium cobalt-based oxide and having an average particle diameter D₅₀ from about 9 µm to about 25 µm is prepared. The first positive electrode active material may be described in the same way as the first positive electrode active material in the aforementioned positive electrode active material, and thus detailed descriptions of the first positive electrode active material are omitted.

### Preparing of Second Positive Electrode Active Material

Particles including lithium cobalt-based oxide and having an average particle diameter D₅₀ from about 1 µm to about 9 µm with a plate-like carbon material are dry-mixed to prepare a second positive electrode active material. The details of the particles of the second positive electrode active material and the carbon material are as described above, and thus detailed descriptions of the particles of the second positive electrode active material and the carbon material are omitted.

The above process may include preparing a plate-like carbon material, and dry mixing the particles and the carbon material.

In the preparing of the carbon material, the carbon material may be obtained by pulverizing graphite having a flake geometry and having an average size D₅₀ from about 3 µm to about 25 µm. In some embodiments, particulate graphite having an average size D₅₀ of less than or equal to about 2.5 µm (which may be a plate-like carbon material) may be prepared by pulverizing graphite having a flake geometry and having an average size D₅₀ from about 3 µm to about 25 µm. The average size D₅₀ of the graphite having the flake geometry may be less than or equal to about 20 µm, less than or equal to about 18 µm, less than or equal to about 15 µm, less than or equal to about 12 µm, or less than or equal to about 10 µm and may be greater than or equal to about 4 µm, greater than or equal to about 5 µm, or greater than or equal to about 6 µm. The average size of the graphite may be measured from a scanning electron microscope image. The average size D₅₀ of the graphite may be measured through a particle size analyzer, and means the size of particles having a cumulative volume of 50 vol% in the particle size distribution. Also, the particle size here may mean a length of the longest axis in the plane direction perpendicular to the thickness direction in the planar geometry.

The graphite may have a ratio I_{D}/I_{G} of the peak intensity I_{D} around 1350 cm⁻¹ to the peak intensity I_{G} around 1580 cm⁻¹ in a Raman spectrum of greater than or equal to about 0.01 and less than about 0.15, for example, from about 0.02 to about 0.14, from about 0.08 to about 0.14, or from about 0.1 to about 0.14.

The pulverizing of the graphite may be performed using a milling process. The milling process may utilize a method known to those skilled in the art, and, for example, may utilize a device such as a ball mill, a bead mill, a jet mill, a pin mill, a roller mill, a hybrid mill, a colloid mill, or an air classifier mill (ACM).

The pulverizing of graphite having a flake geometry may be performed by a ball milling method, and the ball milling may be performed using zirconia beads having a size from about 1 mm to about 25 mm and may be performed at a speed of about 200 rpm to about 5,000 rpm for about 30 minutes to about 4 hours. The size of the zirconia beads used for pulverizing the graphite may be from about 1.2 mm to about 23 mm, from about 1.3 mm to about 21 mm, or from about 1.5 mm to about 20 mm. Additionally, the pulverizing of the graphite may be performed under conditions of about 250 rpm to about 4,500 rpm, about 300 rpm to about 4,000 rpm, about 400 rpm to about 3,000 rpm, or about 600 rpm to about 2,000 rpm. Additionally, the pulverizing of the graphite may be performed from about 30 minutes to about 3 hours or from about 35 minutes to about 3 hours. When the size of the beads, the stirring speed, or the stirring time each satisfy the above ranges, the particle size of the particulate graphite may be controlled to the desired level.

The dry mixing of the particles and the carbon material can utilize a method known to those skilled in the art, for example, a dry mixer, a homogenizer, or a Henschel mixer. When the particles and the carbon material are dry mixed, manufacturing costs may be reduced, deterioration of the second positive electrode active material may be minimized, and a particle strength and a lubrication degree of the particle surface of the second positive electrode active material can be improved. "Dry" may mean a state in which there is no intentional contact with a solvent such as a process solvent, or a state in which there is no intentional inclusion of a solvent.

In the process of dry mixing the particles and the carbon material, the carbon material may be mixed in an amount from about 0.05 wt% to about 5.0 wt%, for example, from about 0.2 wt% to about 5.0 wt%, from about 0.2 wt% to about 3.0 wt%, from about 0.2 wt% to about 2.5 wt%, from about 0.2 wt% to about 2.0 wt%, from about 0.2 wt% to about 1.0 wt%, or from about 0.2 wt% to about 0.8 wt% based on 100 wt% of the total of the particles and the carbon material. When the amount of the carbon material satisfies the above ranges, deterioration of the second positive electrode active material may be minimized, the particle strength and the lubrication degree of the particle surface of the second positive electrode active material may be improved, and the density of the positive electrode may be maximized. Even if the amount of the carbon material is an extremely small amount of less than about 1 wt%, it may be coated on the surface of the particles well, thereby increasing the electrical conductivity of the positive electrode active material, increasing the lubrication degree, and increasing the density of the positive electrode.

The process of dry mixing the particles and the carbon material may be performed by mixing the particles and the carbon material and applying a shear force. A coating layer including graphene having a layered structure exhibiting a dense crystal structure may be provided while crystalline carbon derived from a plate-like carbon material is located in a two-dimensional plane on a surface of a core. The process may be performed using a device for applying shear force, and the device may have a blade inside, although the present disclosure is not limited thereto.

The process may be to mix the particles and the carbon material using a mixer, preferably a Nobilta mixer, and the particles and the carbon material may be mixed at a shear rate from about 1,000 s⁻¹ to about 9,000 s⁻¹ and with a blade rotation speed of less than or equal to about 20 m/s.

In the above process, the particles and carbon material may be mixed at a shear rate from about 1,500 s⁻¹ to about 8,800 s⁻¹, from about 2,000 s⁻¹ to about 8,800 s⁻¹, or from about 2,500 s⁻¹ to about 8,500 s⁻¹. When the shear rate range satisfies the above ranges, a carbon coating layer may be effectively provided on surfaces of the particles while preventing damage to the particles.

The rotation speed of the blade within the device for applying the shear force may be less than or equal to about 18 m/s, less than or equal to about 15 m/s, or less than or equal to about 10 m/s and may be greater than or equal to about 3 m/s, greater than or equal to about 4 m/s, or greater than or equal to about 5 m/s. When the range of the rotation speed of the blade satisfies the above ranges, a coating layer may be effectively provided on the surface of the particles while preventing damage to the particles.

In the above process, the particles and the carbon material may be mixed at a speed of about 500 rpm to about 6,000 rpm, for example, at a speed of about 600 rpm to about 5,500 rpm, about 700 rpm to about 5,000 rpm, or about 800 rpm to about 4,000 rpm. When the mixing conditions satisfy the above ranges, a coating layer may be effectively provided on the surface of the particles while preventing damage to the particles.

### Mixing First Positive Electrode Active Material with Second Positive Electrode Active Material

The first positive electrode active material and the second positive electrode active material may be mixed. In this process, the first positive electrode active material may be mixed in an amount from about 20 wt% to about 95 wt%, for example, from about 30 wt% to about 90 wt%, from about 45 wt% to about 85 wt%, or from about 60 wt% to about 80 wt%, and the second positive electrode active material may be mixed in an amount from about 5 wt% to about 80 wt%, for example, from about 10 wt% to about 70 wt%, from about 15 wt% to about 55 wt%, or from about 20 wt% to about 40 wt% based on a total of 100 wt% of the first positive electrode active material and the second positive electrode active material. When the amounts of the first positive electrode active material and the second positive electrode active material satisfy the above ranges, a capacity of the positive electrode and a mixture density of the positive electrode may be improved, and an energy density of the rechargeable lithium battery may be improved.

### Positive Electrode

According to some embodiments, a positive electrode may include a current collector and a positive electrode active material layer on the current collector, wherein the positive electrode active material layer includes the aforementioned positive electrode active material. The positive electrode active material layer may further include other types of positive electrode active materials in addition to the aforementioned positive electrode active material.

### Current Collector

The current collector is not particularly limited as long as it is conductive and does not cause chemical changes in the positive electrode and the rechargeable lithium battery including the positive electrode. The current collector may include a thin film of aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof and may specifically include an aluminum thin film.

The geometry of the current collector may have various forms such as that of a plate, a thin body, a film, a sheet, a foil, a net, a porous body, a foam body, or a non-woven body. The current collector may include microscopic irregularities on its surface, which may improve adhesion to the positive electrode active material.

A thickness of the current collector may be from about 1 µm to about 20 µm, for example from about 5 µm to about 15 µm or from about 7 µm to about 10 µm.

The positive electrode active material layer may further include a binder, a conductive material, or a combination thereof.

### Binder

The binder may improve binding properties of positive electrode active material particles with one another and with a current collector. The binder may include one or more of polyvinyl alcohol, carboxymethylcellulose, hydroxypropylcellulose, diacetylcellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, and nylon, but the binder is not limited thereto.

In the positive electrode active material layer, the binder may be included in an amount from about 0.1 wt% to about 5 wt%, for example, from about 0.5 wt% to about 4 wt% or from about 1 wt% to about 3 wt% based on 100 wt% of the total positive electrode active material layer. The binder may be included in an amount from about 0.1 wt% to about 1 wt%, for example, less than about 1.0 wt%, or less than or equal to about 0.9 wt% based on a total of 100 wt% of the positive electrode active material layer. Because the positive electrode active material layer includes the aforementioned positive electrode active material, the positive electrode active material layer can exhibit excellent electronic conductivity and may implement low resistance and high positive electrode density even if the positive electrode active material layer does not include a separate binder or includes a very small amount of binder.

### Conductive Material

The conductive material is included to provide electrode conductivity and any electrically conductive material may be used as a conductive material unless it causes a chemical change. The conductive material may include a carbon-based material such as natural graphite, artificial graphite, carbon black, acetylene black, Ketjen black, carbon fiber, carbon nanofiber, or carbon nanotube; a metal-based material containing copper, nickel, aluminum, or silver in the form of metal powder or metal fiber; a conductive polymer such as a polyphenylene derivative; or a mixture thereof.

In the positive electrode active material layer, the conductive material may be included in an amount from about 0.05 wt% to about 5 wt%, for example, from about 0.05 wt% to about 4 wt%, or from about 0.1 wt% to about 3 wt% based on 100 wt% of the total positive electrode active material layer. The conductive material may be included in an amount from about 0.05 wt% to about 1 wt%, for example, less than about 1.0 wt%, less than or equal to about 0.8 wt%, less than or equal to about 0.7 wt%, or less than or equal to about 0.5 wt% based on a total of 100 wt% of the positive electrode active material layer. Because the positive electrode active material layer includes the aforementioned positive electrode active material, the positive electrode active material layer can exhibit excellent electronic conductivity and may implement low resistance and high positive electrode density even if the positive electrode active material layer does not include a separate conductive material or includes a very small amount of conductive material.

When the density of the positive electrode active material layer satisfies the above ranges, the energy density of the rechargeable lithium battery may be improved. Because the positive electrode active material included in the positive electrode active material layer has a high particle strength and a high lubrication degree of the particle surface, a compression process may be performed at a greater pressure during the manufacture of the positive electrode. In addition, because the lubrication degree of the surface of the positive electrode active material is high, a compression efficiency of the positive electrode may be increased by the sliding effect. In addition, because the compression process may be performed at a greater pressure, pores of the electrode plates in the positive electrode active material layer may be reduced, and the density of the positive electrode active material layer may be improved. The density of the positive electrode active material layer means the ratio of a weight of the positive electrode active material layer to a volume of the positive electrode active material layer in the compressed positive electrode. The density of the positive electrode active material layer may be obtained by measuring a cross-sectional area, a thickness, and the weight of the positive electrode active material layer excluding the positive electrode current collector, calculating the volume by multiplying the cross-sectional area and the thickness, and dividing the weight by the volume.

The adhesive strength of the positive electrode active material layer to the current collector may be greater than or equal to about 0.5 gf/mm, and the resistivity of the positive electrode active material layer may be less than or equal to about 40 Ω·cm. The adhesive strength of the positive electrode active material layer to the current collector may be greater than or equal to about 1.0 gf/mm, greater than or equal to about 1.5 gf/mm, greater than or equal to about 2.0 gf/mm, or greater than or equal to about 2.5 gf/mm and may be less than or equal to about 30 gf/mm, less than or equal to about 28 gf/mm, less than or equal to about 25 gf/mm, or less than or equal to about 23 gf/mm. Additionally, the resistivity of the positive electrode active material layer may be less than or equal to about 35 Ω·cm, less than or equal to about 30 Ω·cm, less than or equal to about 25 Ω·cm, or less than or equal to about 20 Ω·cm and may be greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. Because the positive electrode active material layer includes the aforementioned positive electrode active material, the positive electrode active material layer can exhibit excellent electronic conductivity and may implement low resistance, even if the positive electrode active material layer does not include a separate conductive material or includes a very small amount of conductive material, and may implement high electrode plate adhesive strength, even if it includes a very small amount of binder.

A thickness of the positive electrode active material layer may be from about 40 µm to about 300 µm, for example, from about 50 µm to about 200 µm or from about 80 µm to about 150 µm. When the thickness of the positive electrode active material layer satisfies the above ranges, a high-capacity and high-energy-density battery may be realized. The thickness of the positive electrode active material layer may be measured through a SEM image of the positive electrode cross-section. However, the present disclosure is not limited thereto, and the thickness of the positive electrode active material layer may be measured through TEM, TOF-SIMS, XPS, or EDS analysis.

A porosity of the positive electrode may be less than or equal to about 30%, less than or equal to about 25%, or less than or equal to about 20% and may be greater than or equal to about 1%, greater than or equal to about 5%, or greater than or equal to about 7%. When the porosity of the positive electrode satisfies the above ranges, the capacity and the energy density of the positive electrode may be improved. The porosity of the positive electrode means a ratio of volume of the pores present within the positive electrode to a total volume of the positive electrode and may be measured, for example, by mercury porosimetry.

### Rechargeable Lithium Battery

A rechargeable lithium battery according to the invention includes a positive electrode including a current collector, and a positive electrode active material layer on the current collector, wherein the positive electrode active material layer includes the aforementioned positive electrode active material; a negative electrode; and an electrolyte. The rechargeable lithium battery may be a lithium ion battery using a liquid electrolyte, or an all-solid-state rechargeable battery or a semi-solid rechargeable battery using a solid electrolyte.

The rechargeable lithium battery may be classified into cylindrical, prismatic, pouch, or coin types, depending on a geometry of the rechargeable lithium battery.

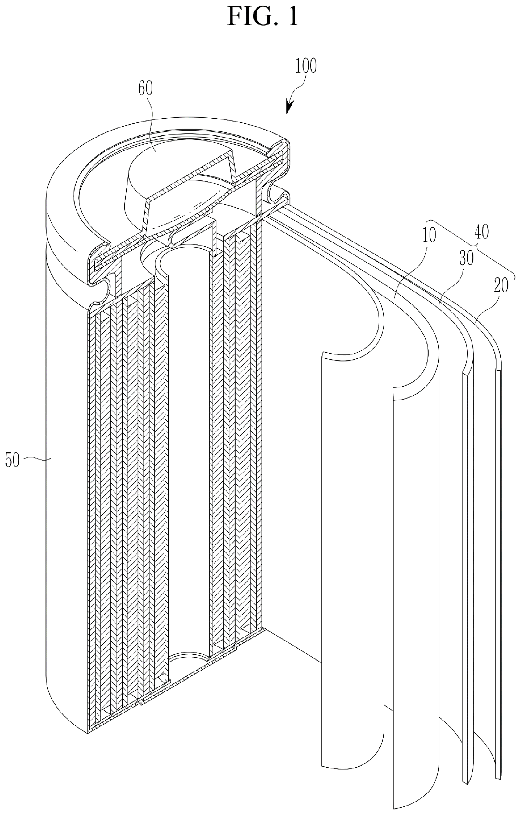

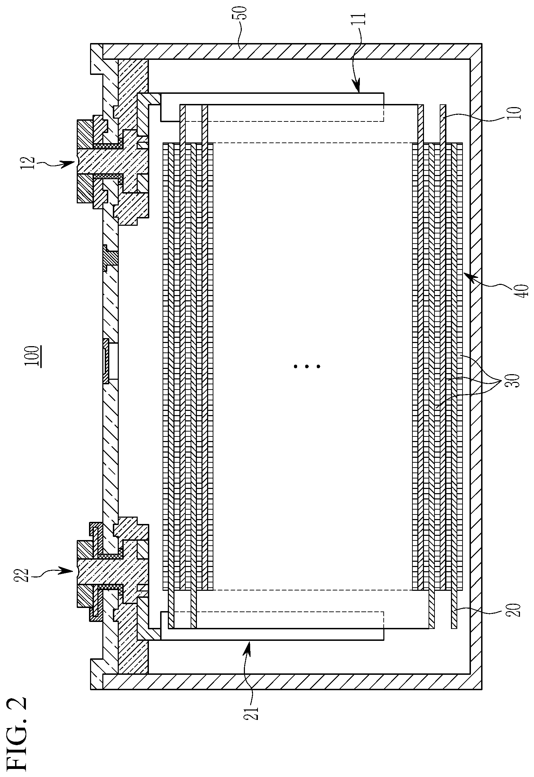

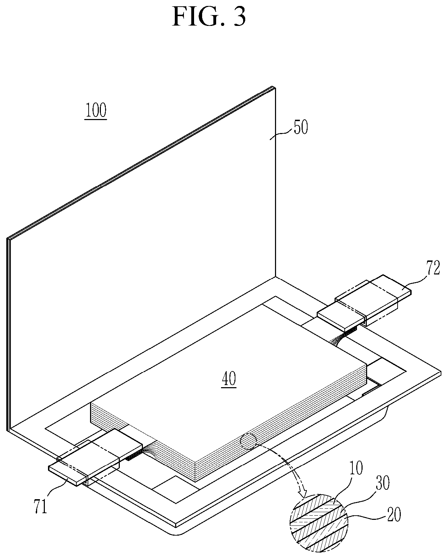

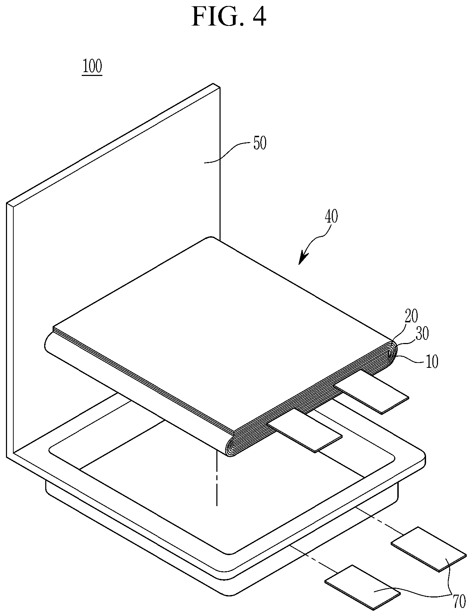

FIGS. 1 to 4 are schematic views showing a rechargeable lithium battery according to some embodiments of the present disclosure. Particularly, FIG. 1 shows a cylindrical battery, FIG. 2 shows a prismatic battery, and FIGS. 3 and 4 each show a battery having a pouch geometry.

The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 and, particularly, includes a positive electrode tab 71 and a negative electrode tab 72 serving as an electrical path for inducing the current provided in the electrode assembly 40 to the outside.

The rechargeable lithium battery according to some embodiments may be rechargeable at a high voltage or may be suitable for being driven at a high voltage. The charging voltage of a rechargeable lithium battery may be greater than or equal to about 4.45 V, from about 4.45 V to about 4.7 V, from about 4.45 V to about 4.6 V, or from about 4.45 V to about 4.55 V. By applying the positive electrode active material according to some embodiments, the rechargeable lithium battery can significantly reduce an amount of gas generated even when charged at a high voltage and can achieve high capacity and long cycle-life characteristics.

### Negative Electrode

The negative electrode may include a current collector and a negative electrode active material layer on the current collector. The negative electrode active material layer may include a negative electrode active material and may further include a binder, a conductive material, or a combination thereof.

### Negative Electrode Active Material

The negative electrode active material may include a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may include a carbon-based negative electrode active material, for example, crystalline carbon, amorphous carbon, or a combination thereof. The crystalline carbon may be irregular, sheet, flake, spherical, or fiber shaped natural graphite and/or artificial graphite. The amorphous carbon may be a soft carbon, a hard carbon, a mesophase pitch carbonization product, or calcined coke.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an alkali metal, an alkaline earth metal, a Group 13 element, a Group 14 element [excluding Si], a Group 15 element, a Group 16 element, a transition metal, a rare earth element, or a combination thereof, and, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof), or a combination thereof. The Sn-based negative electrode active material may be Sn, SnO₂, a Sn-based alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles. In some embodiments, the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and/or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the silicon-carbon composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may be present as silicon alone, in the form of a silicon alloy, or in an oxidized form. The oxidized form of the silicon may be represented as SiOₓ (0<x≤2). The atomic ratio of Si:O, which indicates the degree of oxidation, may be from about 99:1 to about 33:67.

The Si-based negative electrode active material or Sn-based negative electrode active material may be mixed with the carbon-based negative electrode active material. When a Si-based negative electrode active material or a Sn-based negative electrode active material is used in combination with a carbon-based negative electrode active material, a weight ratio of the Si-based negative electrode active material or the Sn-based negative electrode active material to the carbon-based negative electrode active material may be from about 1:99 to about 90:10.

The negative electrode active material may be included in an amount from about 80 wt% to about 99 wt%, for example, from about 85 wt% to about 99 wt%, or from about 90 wt% to about 99 wt%% based on 100 wt% of the total negative electrode active material layer.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The binder may be included in an amount from about 0.5 wt% to about 5 wt%, for example, from about 0.5 wt% to about 4 wt% or from about 1 wt% to about 3 wt% based on 100 wt% of the total negative electrode active material layer.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, and/or a carbon nanotube; a metal-based material of a metal powder or a metal fiber including copper, nickel, aluminum, and/or silver; a conductive polymer such as a polyphenylene derivative; or a mixture thereof.

The conductive material may be included in an amount from about 0.5 wt% to about 5 wt%, for example, from about 0.5 wt% to about 4 wt% or from about 1 wt% to about 3 wt% based on 100 wt% of the total negative electrode active material layer.

### Current Collector

There is no particular limitation on the negative electrode current collector as long as the negative electrode current collector does not cause chemical changes in the negative electrode and the rechargeable lithium battery including the negative electrode. The negative electrode current collector can be a copper foil, a nickel foil, a stainless steel foil, a titanium foil, a nickel foam, a copper foam, a polymer substrate coated with a conductive metal, or a combination thereof.

The negative electrode current collector may be one or more of various geometries, such as a plate, a thin body, a film, a sheet, a foil, a net, a porous body, a foam body, or a non-woven body. The negative electrode current collector may include microscopic irregularities on its surface, which may improve adhesive strength to the negative electrode active material.

A thickness of the negative electrode current collector may be from about 1 µm to about 20 µm, for example, from about 5 µm to about 15 µm, or from about 7 µm to about 10 µm.

### Electrolyte

The electrolyte for a rechargeable lithium battery may be an electrolyte solution, which may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, t-butyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran.

The ketone-based solvent may include cyclohexanone. The alcohol-based solvent may include ethanol and/or isopropyl alcohol, and the aprotic solvent may include nitriles such as R-CN (wherein R is a C2 to C20 linear, branched, or cyclic hydrocarbon group, and may include a double bond, an aromatic ring, and/or an ether group); amides such as dimethylformamide; dioxolanes such as 1,3-dioxolane, and/or 1,4-dioxolane; and/or sulfolanes.

The non-aqueous organic solvent may be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve a cycle life of the rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent may supply lithium ions in a battery, may enable a basic operation of a rechargeable lithium battery, and may improve transportation of the lithium ions between positive and negative electrodes. Examples of the lithium salt may include one or more selected from LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, excellent performance of the rechargeable lithium battery can be achieved, and lithium ions can move effectively.

### Separator

Depending on the type of rechargeable lithium battery, the rechargeable lithium battery may further include a separator between the positive and negative electrodes. The separator may include polyethylene, polypropylene, polyvinylidene fluoride, or a multilayer film of two or more layers thereof and may include a mixed multilayer film such as a polyethylene/polypropylene two-layer separator, polyethylene/polypropylene/polyethylene three-layer separator, and/or polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film provided of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and TEFLON (polytetrafluoroethylene), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm. The average particle diameter D₅₀ of the inorganic particles may be obtained by randomly selecting about 20 particles from a scanning electron microscope image of the inorganic particles, measuring their particle diameters (diameter, long diameter, or long axis length) to obtain a particle size distribution, and then taking the size of particles having a cumulative volume of 50 vol% from the particle size distribution as the average particle diameter.

The organic material and the inorganic material may be mixed in one coating layer, or a coating layer including an organic material and a coating layer including an inorganic material may be stacked. A thickness of the coating layer may be from about 0.5 µm to about 20 µm, for example, from about 1 µm to about 10 µm or from about 1 µm to about 5 µm.

The rechargeable lithium battery according to some embodiments may be applied to automobiles, mobile phones, or various types of electrical devices, but the rechargeable lithium battery is not limited thereto.

Hereinafter, examples and comparative examples of the present invention are described. The following examples are merely illustrative of the present invention, and the present invention is not limited to the following examples.

### Example 1

### (1) Preparation of Positive Electrode Active Material

### (a) Preparation of First Positive Electrode Active Material

Particles having a composition of LiCoO₂(LCO) and an average particle diameter D₅₀ of 17 µm were prepared as a first positive electrode active material.

### (b) Preparation of Second Positive Electrode Active Material

Graphite having a flake geometry (DJrGO-SF (Dongjin Semichem), average particle diameter D₅₀: 3 µm) was mixed with ZrO₂ beads having a particle diameter of 2 mm, which was 10 times a weight of the graphite. Subsequently, the graphite was milled with the beads at 1,000 rpm for 1 hour to prepare graphite particulates having an average particle diameter D₅₀ of 100 nm.

After preparing particles having a composition of LiCoO₂(LCO) and an average particle diameter D₅₀ of 5 µm, 99.8 wt% of the particles and 0.2 wt% of the graphite particulates were put into a dry mixer. After adjusting a shear rate to 5,000 s⁻¹ and after setting a rotation speed of a blade in the mixer to 10 m/s, the particles and the graphite particulates were mixed for 10 minutes to prepare a second positive electrode active material.

### (c) Preparation of Positive Electrode Active Material

The first positive electrode active material and the second positive electrode active material were mixed in a weight ratio of 70:30 to prepare a positive electrode active material.

### (2) Manufacturing of Positive Electrode

99.1 wt% of the positive electrode active material prepared in section (1) of Example 1, 0.2 wt% of carbon nanotube (operating as a conductive material), and 0.7 wt% of polyvinylidene fluoride (operating as a binder) were dispersed in an N-methylpyrrolidone (NMP) solvent to prepare a positive electrode active material slurry. The positive electrode active material slurry was coated on a 12 µm-thick aluminum substrate (a current collector) and dried to form a positive electrode active material layer, and then was compressed to manufacture a positive electrode.

### (3) Manufacturing of Rechargeable Lithium Battery Cell

The positive electrode manufactured in section (2) of Example 1 and a lithium metal counter electrode were used, and a separator having a polyethylene polypropylene multilayer structure was interposed between the positive electrode and the lithium metal counter electrode. An electrolyte solution (which was prepared by adding 1.3 M LiPF₆ lithium salt to a solvent including ethylene carbonate, propylene carbonate, and propyl propionate mixed in a volume ratio of 10:15:75) was injected into the electrode assembly of the positive electrode, the separator, and the lithium metal counter electrode to manufacture a rechargeable lithium battery cell via a conventional method.

### Example 2

A positive electrode active material, a positive electrode, and a rechargeable lithium battery cell were manufactured substantially in the same manner as in Example 1 except that 99.5 wt% of the particles and 0.5 wt% of the graphite particulates were mixed in '(1) Preparation of Positive Electrode Active Material' of Example 1.

### Example 3

A positive electrode active material, a positive electrode, and a rechargeable lithium battery cell were manufactured substantially in the same manner as in Example 1 except that 99.0 wt% of the particles and 1.0 wt% of the graphite particulates were mixed in '(1) Preparation of Positive Electrode Active Material' of Example 1.

### Example 4

A positive electrode active material, a positive electrode, and a rechargeable lithium battery cell were manufactured substantially in the same manner as in Example 1 except that 98.0 wt% of the particles and 2.0 wt% of the graphite particulates were mixed in '(1) Preparation of Positive Electrode Active Material' of Example 1.

### Comparative Example 1

### (1) Preparation of Positive Electrode Active Material

### (a) Preparation of First Positive Electrode Active Material

Graphite having a flake geometry (DJrGO-SF (Dongjin Semichem), average particle diameter D₅₀: 3 µm) was mixed with ZrO₂ beads with a particle diameter of 2 mm, which was 10 times a weight of the graphite. Subsequently, the graphite was milled with the beads under a condition of 1,000 rpm for 1 hour to prepare graphite particulates with an average particle diameter D₅₀ of 100 nm.

After preparing particles with a composition of LiCoO₂(LCO) and an average particle diameter D₅₀ of 17 µm, 99.8 wt% of the particles and 0.2 wt% of the graphite particulates were put into a dry mixer. After setting a shear rate to 5,000 s⁻¹ and after setting a rotation speed of a blade in the mixer to 10 m/s, the particles and the graphite particulates were mixed for 10 minutes to prepare a first positive electrode active material.

### (b) Preparation of Second Positive Electrode Active Material

After preparing particles having a composition of LiCoO₂(LCO) and an average particle diameter D₅₀ of 5 µm, 99.8 wt% of the particles and 0.2 wt% of the graphite particulates used in '(a) Preparation of First Positive Electrode Active Material,' of Comparative Example 1, were put into a dry mixer. After setting a shear rate to 5,000 s⁻¹ and after setting a rotation speed of a blade in the mixer to 10 m/s, the particles and the graphite particulates were mixed for 10 minutes to obtain a second positive electrode active material.

### (c) Preparation of Positive Electrode Active Material

The first positive electrode active material and the second positive electrode active material were mixed in a weight ratio of 70:30 to prepare a positive electrode active material.

### (2) Manufacturing of Positive Electrode and Rechargeable Lithium Battery Cell

The positive electrode active material of Comparative Example 1 was used to manufacture a positive electrode and a rechargeable lithium battery cell substantially in the same manner as in Example 1.

### Comparative Example 2

### (1) Preparation of Positive Electrode Active Material

### (a) Preparation of First Positive Electrode Active Material

Graphite having a flake geometry (DJrGO-SF (Dongjin Semichem), average particle diameter D₅₀: 3 µm) was mixed with ZrO₂ beads having a particle diameter of 2 mm, which was 10 times a weight of the graphite. Subsequently, the graphite was milled with the beads at 1,000 rpm for 1 hour to prepare graphite particulates with an average particle diameter D₅₀ of 100 nm.

After preparing particles having a composition of LiCoO₂(LCO) and an average particle diameter D₅₀ of 17 µm, 99.8 wt% of the particles and 0.2 wt% of the graphite particulates were put into a dry mixer. After setting a shear rate to 5,000 s⁻¹ and after setting a rotation speed of a blade in the mixer to 10 m/s, the particles and the graphite particulates were mixed for 10 minutes to obtain a first positive electrode active material.

### (b) Preparation of Second Positive Electrode Active Material

Particles having a composition of LiCoO₂(LCO) and an average particle diameter D₅₀ of 5 µm were prepared as a second positive electrode active material.

### (c) Preparation of Positive Electrode Active Material

The first positive electrode active material and the second positive electrode active material were mixed at a weight ratio of 70:30 to prepare a positive electrode active material.

### (2) Manufacturing of Positive Electrode and Rechargeable Lithium Battery Cell

The positive electrode active material of Comparative Example 2 was used substantially in the same manner as in Example 1 to manufacture a positive electrode and a rechargeable lithium battery cell.

### Comparative Example 3

A positive electrode active material, a positive electrode, and a rechargeable lithium battery cell were manufactured substantially in the same manner as in Example 1 except that carbon black (product name: Super P, manufacturer: TIMCAL Graphite & Carbon) instead of the graphite particulates was mixed with the particles to prepare the second positive electrode active material in '(b) Preparation of Second Positive Electrode Active Material' of Example 1.

### Comparative Example 4

A positive electrode active material, a positive electrode, and a rechargeable lithium battery cell were manufactured substantially in the same manner as in Example 1 except that carbon nanotube (product name: Flotube 6807, manufacturer: Cnano) instead of the graphite particulates was mixed with the particles to prepare the second positive electrode active material in '(b) Preparation of Second Positive Electrode Active Material' of Example 1.

### Evaluation Example 1: Electron Microscope Image Analysis

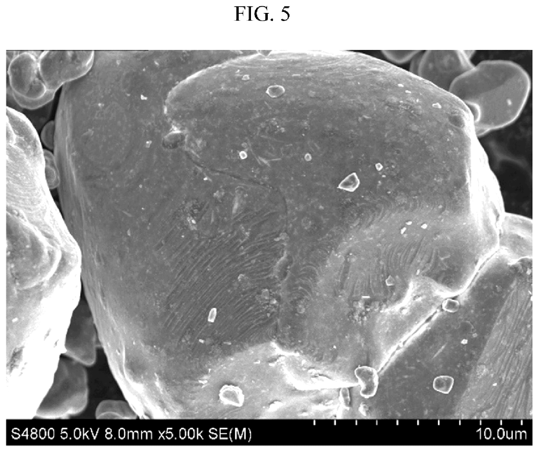

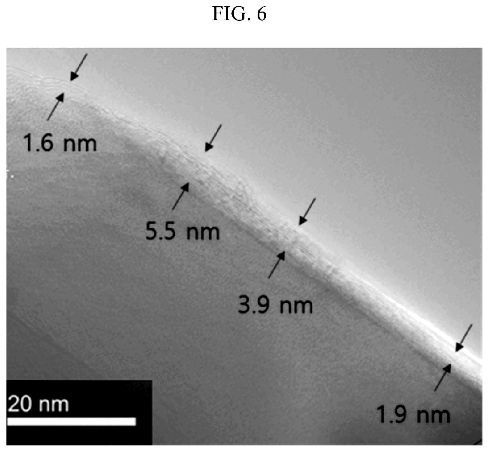

FIG. 5 shows a scanning electron microscope image of the surface of a second positive electrode active material according to some embodiments of the present disclosure, and FIG. 6 shows a transmission electron microscope image of the cross-section of a second positive electrode active material according to some embodiments of the present disclosure. Particularly, FIGS. 5 and 6 show the second positive electrode active material of Example 1.

Further, cross-section of the second positive electrode active material of Example 1 was prepared using a focused ion beam (FIB) and observed via transmission electron microscopy (TEM). The result confirmed that coating layers comprising graphene having a layered structure of two or more layers was formed on the second positive electrode active materials. In addition, the thickness of the coating layers was about 1.6 nm to about 5.5 nm.

The second positive electrode active material of Example 1 was confirmed to have a carbon coating layer having a layered structure on the surfaces of the particles. In addition, the coating layer had a very thin and uniform thickness and continuously wrapped around the surface of the core particles.

### Evaluation Example 2: Analysis of Physical Properties of Positive Electrode Active Material

The positive electrode active materials of the examples and the comparative examples were analyzed with respect to particle strength, and the results are shown in Table 1 below. A specific evaluation method of analyzing the positive electrode active materials is as follows: after placing the active material particles on a plate, a compression force was increased by using a micro compression testing machine (product name: MCT-W500, manufacturer: Shimadzu Corp.), a force at which a particle was broken was measured, and total of 20 particles were measured with respect to the forces, which were averaged to obtain particle strength.

### Evaluation Example 3: Analysis of Physical Properties of Positive Electrode

The positive electrodes of the examples and the comparative examples were analyzed with respect to density of the positive electrode active material layers, and the results are shown in Table 1. A specific evaluation method of analyzing the positive electrodes is as follows: the positive electrode active material layers excluding positive electrode current collectors were measured with respect to a cross-sectional area, a thickness, and a weight; subsequently, the cross-sectional area was multiplied with the thickness to obtain a volume; and the weight was divided by the volume to calculate density of each of the positive electrode active material layers.

### Evaluation Example 4: Performance Analysis of Rechargeable Lithium Battery Cell

The rechargeable lithium battery cells of the examples and the comparative examples were analyzed with respect to initial discharge capacity, a capacity retention rate (cycle-life characteristics), and storage characteristics at a high temperature, and the results are shown in Table 1. A specific evaluation method of analyzing the rechargeable lithium battery cells is as follows in sections (1)-(3), below.

### (1) Initial discharge capacity

The rechargeable lithium battery cells were charged under conditions of constant current (0.2 C) and constant voltage (4.25 V; 0.05 C cut-off), paused for 10 minutes, and discharged to 3.0 V under the condition of constant current (0.2 C) at 25°C for an initial charge and discharge step. Herein, an initial discharge capacity of the cells was measured.

### (2) Capacity retention rate

After the initial charge and discharge, the cells were 50 times repeatedly charged and discharged under conditions of 0.5 C/0.5 C at 25°C to measure a discharge capacity at the 50^{th} cycle. A percentage of the discharge capacity at the 50^{th} cycle to the discharge capacity at the 1^{st} cycle was calculated and then shown as a capacity retention rate (i.e., cycle-life characteristics).

### (3) Storage Characteristics at High Temperature

The rechargeable lithium battery cells were charged at 4 A and 4.2 V, cut off at 100 mA, and then paused for 30 minutes at room temperature (25°C). Subsequently, the cells were discharged respectively at 10 A for 10 seconds, at 1 A for 10 seconds, and at 10 A for 4 seconds and were then measured with respect to a current and a voltage at 18 seconds and at 23 seconds to calculate DC-IR (a difference between resistance at the 18 seconds and resistance at the 23 seconds) according to ΔR=ΔV/ΔI.

The rechargeable lithium battery cells were allowed to stand under a charge condition of 0.2 C and 4.2 V and allowed to stand at 60°C for 50 days to measure DC-IR and then calculate a percentage of DC-IR after being allowed to stand to the initial DC-IR, which was shown as a resistance increase rate (i.e., storage characteristics at a high temperature).

**Table 1:**

| | First positive electrode active material | Second positive electrode active material | | | Particle strength (MPa) | Density of positive electrode active material layer *(g*/*cc)* | Initial discharge capacity (mAh/g) | Capacity retention rate (%) | Initial DC-IR (mΩ) | DC-IR after being left (mΩ) | Resistanc e increase rate (%) |
|---|---|---|---|---|---|---|---|---|---|---|---|
| | Coated (○) or not (×) | Amount of particles (wt%) | Amount of carbon material (wt%) | Type of carbon material | | | | | | | |
| Ex. 1 | × | 99.8 | 0.2 | graphite (100nm) | 148 | 3.73 | 212 | 90 | 12.6 | 20.8 | 65 |
| Ex. 2 | × | 99.5 | 0.5 | graphite (100nm) | 148 | 3.75 | 211 | 90 | 13.5 | 21.6 | 60 |
| Ex. 3 | × | 99.0 | 1.0 | graphite (100nm) | 150 | 3.73 | 212 | 91 | 15.0 | 23.3 | 55 |
| Ex. 4 | × | 98.0 | 2.0 | graphite (100nm) | 150 | 3.75 | 212 | 92 | 12.8 | 20.7 | 62 |
| Comp. Ex. 1 | ○ | 99.8 | 0.2 | graphite (100nm) | 140 | 3.68 | 210 | 86 | 13.2 | 24.9 | 89 |
| Comp. Ex. 2 | ○ | 100.0 | - | - | 145 | 3.68 | 210 | 85 | 13.9 | 23.9 | 72 |
| Comp. Ex. 3 | × | 99.8 | 0.2 | Super P | 142 | 3.70 | 209 | 86 | 15.0 | 27.8 | 85 |
| Comp. Ex. 4 | × | 99.8 | 0.2 | CNT | 140 | 3.65 | 209 | 85 | 14.2 | 25.6 | 80 |

Referring to Table 1, Examples 1 to 4 exhibited a low resistance increase rate from 55% to 65% and excellent storage characteristics at a high temperature. In addition, Examples 1 to 4 exhibited a capacity retention rate from 90% to 92% and excellent cycle-life characteristics. Furthermore, Examples 1 to 4 were confirmed to exhibit high particle strength, high density of the positive electrode active material layers, and high initial discharge capacity.

On the other hand, Comparative Example 1, which included a carbon coating layer on the surface of the first positive electrode active material and the second positive electrode active material, exhibited significantly deteriorated storage characteristics at a high temperature and cycle-life characteristics, compared to Examples 1 to 4. In addition, Comparative Example 1 was confirmed to exhibit less particle strength, a lesser density of the positive electrode active material layer, and a lesser initial discharge capacity when compared to Examples 1 to 4.

Furthermore, Comparative Example 2, which included no carbon coating layer on the surface of the second positive electrode active material, exhibited deteriorated storage characteristics at a high temperature and deteriorated cycle-life characteristics, compared to Examples 1 to 4. In addition, Comparative Example 2 was confirmed to exhibit less particle strength, a lesser density of the positive electrode active material layer, and a lesser initial discharge capacity when compared to Examples 1 to 4.

In addition, Comparative Examples 3 and 4, whose carbon coating layers were respectively derived from Super P or a carbon nanotube, exhibited significantly deteriorated storage characteristics at a high temperature and significantly deteriorated cycle-life characteristics, compared to Examples 1 to 4. In addition, Comparative Examples 3 and 4 were confirmed to exhibit less particle strength, a lesser density of the positive electrode active material layers, and a lesser initial discharge capacity when compared to Examples 1 to 4.

While this invention has been described in connection with some practical embodiments, the present disclosure is not limited to the above-described embodiments. The present disclosure is intended to cover various modifications and equivalent arrangements of the above-described embodiments.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A positive electrode active material comprising:
a first positive electrode active material comprising particles comprising a lithium cobalt-based oxide, wherein the particles of the first positive electrode active material have an average particle diameter D₅₀ from 9 µm to 25 µm; and
a second positive electrode active material comprising particles comprising:
a lithium cobalt-based oxide; and
a layered carbon coating layer on a surface of the particles of the second positive electrode active material,
wherein the particles of the second positive electrode active material have an average particle diameter D₅₀ from 1 µm to 9 µm.

2. The positive electrode active material as claimed in claim 1, wherein the second positive electrode active material comprises the carbon coating layer in an amount from 0.05 wt% to 5.0 wt% based on 100 wt% of the second positive electrode active material.

3. The positive electrode active material as claimed in claim 1 or 2, wherein the carbon coating layer of the second positive electrode active material comprises graphene having a layered structure comprising from 2 layers to 50 layers.

4. The positive electrode active material as claimed in claim 3, wherein in the carbon coating layer, the graphene is derived from a plate-like carbon material.

5. The positive electrode active material as claimed in claim 4,
wherein the carbon material comprises graphene, graphite, or a combination thereof; and/or wherein an average size D₅₀ of the carbon material is less than or equal to 2.5 µm; and/or wherein an average size D₅₀ of the carbon material is from 50 nm to 900 nm; and/or wherein a thickness of the carbon material is less than or equal to 1.0 µm.

6. The positive electrode active material as claimed in any of the preceding claims, wherein the carbon coating layer has a form of a continuous film or an island.

7. The positive electrode active material as claimed in any of the preceding claims, wherein the carbon coating layer has a ratio I_{D}/I_{G}, expressed as a peak intensity I_{D} near 1350 cm⁻¹ to a peak intensity I_{G} near 1580 cm⁻¹ in a Raman spectrum, that is from 0.15 to 0.50.

8. The positive electrode active material as claimed in any of the preceding claims, wherein the first positive electrode active material comprises less than or equal to 0.01 wt% of a carbon material on a surface of each particle of the first positive electrode active material.

9. The positive electrode active material as claimed in any of the preceding claims, wherein the lithium cobalt-based oxide of the first positive electrode active material and the lithium cobalt-based oxide of the second positive electrode active material are the same as each other or are different from each other, and are each independently represented by:
Liₐ₁Coₓ₁M¹_{y1}O_{2-b1}X_{b1},
wherein 0.9≤a1≤1.8, 0.7≤x1≤1, 0≤y1≤0.3, 0.9≤x1+y1≤1.1, and 0≤b1≤0.1,
wherein M¹ is one or more elements of Al, B, Ba, Ca, Ce, Cr, Cu, Fe, Mg, Mn, Mo, Ni, Se, Si, Sn, Sr, Ti, V, W, Y, Zn, and Zr, and
wherein X is one or more elements of F, P, and S.

10. The positive electrode active material as claimed in any of the preceding claims, wherein the lithium cobalt-based oxide of the first positive electrode active material and the lithium cobalt-based oxide of the second positive electrode active material each further contain aluminum, and
wherein the second positive electrode active material comprises a greater amount of aluminum, based on 100 wt% of a total metal in the second positive electrode active material excluding lithium, than an amount of aluminum in the first positive electrode active material based on 100 wt% of a total metal in the first positive electrode active material excluding lithium.

11. The positive electrode active material as claimed in any of the preceding claims, wherein the positive electrode active material comprises the first positive electrode active material in an amount from 20 wt% to 95 wt% based on a total of 100 wt% of the first positive electrode active material and the second positive electrode active material, and
wherein the positive electrode active material comprises the second positive electrode active material in an amount from 5 wt% to 80 wt% based on the total of 100 wt% of the first positive electrode active material and the second positive electrode active material.

12. A method of preparing a positive electrode active material, the method comprising:
preparing a first positive electrode active material comprising particles comprising a lithium cobalt-based oxide, the particles of the first positive electrode active material having an average particle diameter D₅₀ from 9 µm to 25 µm;
preparing a second positive electrode active material by dry mixing particles of the second positive electrode active material, which comprise a lithium cobalt-based oxide and which have an average particle diameter D₅₀ from 1 µm to 9 µm, with a plate-like carbon material; and
mixing the first positive electrode active material and the second positive electrode active material.

13. The method as claimed in claim 12,
further comprising preparing the carbon material so that the carbon material has an average size D₅₀ of less than or equal to 2.5 µm; and/or
wherein preparing the second positive electrode active material comprises:
mixing the particles of the second positive electrode active material and the carbon material using a mixer, preferably a Nobilta mixer; and
mixing the particles of the second positive electrode active material and the carbon material at a shear rate from 1,000 s⁻¹ to 9,000 s⁻¹ and using a blade rotation speed of less than or equal to 20 m/s.

14. The method as claimed in claim 12 or 13, wherein preparing the second positive electrode active material comprises mixing the particles of the second positive electrode active material and an amount of the carbon material ranging from 0.05 wt% to 5.0 wt% based on a total of 100 wt% of the particles of the second positive electrode active material and the carbon material.

15. A rechargeable lithium battery comprising:
a positive electrode comprising:
a current collector; and
a positive electrode active material layer on the current collector,
wherein the positive electrode active material layer comprises the positive electrode active material as claimed in any of claims 1-11;
a negative electrode; and
an electrolyte.
